# EUROPEAN PATENT SPECIFICATION

(11) **EP 3 832 558 B1**
(45) Date of publication and mention of the grant of the patent: **19.03.2025**
(21) Application number: 19214209.9
(22) Date of filing: 06.12.2019
(51) Int. Cl.: G06Q 10/00

(54) **METHOD OF CARTONING**
KARTONIERUNGSVERFAHREN
PROCÉDÉ D'ENCARTONNAGE

(43) Date of publication of application: 09.06.2021
(73) Proprietor: Manyfolds GmbH, 81373 München (DE)
(72) Inventor: Thomsen, Frank, 81373 München (DE); Gutmann, Sebastian, 81373 München (DE)
(74) Representative: Mzb PartmbB

(56) References cited:
- WO-A1-2006/115350
- CA-A1- 2 460 918
- CA-A1- 2 821 761
- US-A1- 2014 067 104
- US-A1- 2015 047 297
- US-A1- 2016 130 025

## Description

### Technical Field

The invention relates to the products and process as per the first portion of the independent claims.

### Background Art

As NPL1 points out, packaging affects the cost of every logistical activity and has a significant impact on the productivity of supply chains. Transport and storage costs are directly related to the size and density of packages. Handling cost depends on unit-loading techniques. Inventory control depends on the accuracy of manual or automatic identification systems. Customer service depends on the protection afforded to products as well as the cost to unpack and discard packing materials. An integrated logistics approach to packaging can yield dramatic savings.

Considering this potential, NPL1 discloses a process as per the first portion of Claim 1.

Document CA 2 460 918 A1 discloses a server and client arrangement in which a user makes a number of selections respectively based upon a number of criteria in order to custom design packed objects.

### Summary of invention

The invention as claimed is hereinafter disclosed in such a way that the technical problem with which it deals can be appreciated and the solution can be understood.

### Technical Problem

According to a study, approximately 20 % of all goods returned in e-commerce are rejected because the products or packaging were damaged during transport. In the U.S. alone, $ 32 billion worth of goods were returned during the 2017 Christmas season. At a return rate of 1:5, this results in an astonishing figure of 6.4 billion dollars in damaged products.

This is mainly due to inadequately secured goods and incorrectly dimensioned shipping packages: packaging that is too large or too small, contains no or insufficient padding, or individual products colliding within packages. In most cases, packaging is simply oversized. Studies estimate that between 24 and 50 % of packaging contain nothing but air.

The impact on our environment is tangible: 122 million tons of carbon dioxide are released solely through such "dispatch of air". As for e-commerce merchants, shipping air plainly translates into less revenue as package size accounts for a significant proportion of the shipping price.

Individual orders pose a specific challenge: having the right box in stock and assembling it, nesting the goods as tightly as possible, providing additional padding, et cetera. Conventional packaging fails to provide an ideal solution for most such orders.

Although systems are available to support the packaging process, these are usually bulky and prohibitively expensive, unnecessarily tying up capital. For the many small to medium-sized retailers and enterprises, these systems prove neither feasible nor economical. Moreover, most fully automated packaging systems were designed not for multiple products within a single package, but for a single product per package. It is for this reason that so many separate packages are shipped.

### Solution to Problem

The problem is solved as per the characterizing portion of the independent claims.

### Advantageous effect of invention

A system as per the invention provides unified access to on-demand custom packaging: For each shipping item, an ideal package is prepared for production virtually unattended. Users select whether to produce immediately on a local, compact machine or to outsource production to an external service and have a flat ("knocked-down") folding carton delivered, commonly referred to in the industry as a "blank". All that remains to do is fold the inlays, erect the box-shaped container, and insert the merchandise into the former's cut-outs. Upon shipping, goods are ideally protected both from other articles within their container and from external damage. Packaging is reduced to an absolute minimum, additional padding of items eliminated.

### Brief description of drawings

Figure 1 shows a template outlining a spacer designed to retain an item sized 100 mm x 175 mm x 70 mm at a defined distance from the top or bottom of its container.
Figure 2 shows a template outlining a protective inlay for establishing a predetermined position of the item relative to its container, for example, to allow for automated unpacking such as by a robot.
Figure 3 shows a template outlining a box-shaped container, as per International Fiber Board Case Code 0201 (FEFCO), for housing said item.
Figure 4 shows an exploded view of the item, protective inlay, and bilateral spacers.
Figure 5 shows a fully assembled view of the item, inlay, and spacers.
Figure 6 shows a perspective view of three items to be accommodated by a carton.
Figure 7 shows a simple rectangular nesting of the items.
Figure 8 shows a blank for a carton inlay based on the nesting.
Figure 9 shows the items framed by the inlay.
Figure 10 shows a well-spaced arrangement of the items.
Figure 11 shows a blank for an inlay having bridges for spacing.
Figure 12 shows the items arranged within the inlay.

### Description of embodiments

The invention essentially consists of three components:
a client such as an app or Web browser, backend server, hardware adapted for standard supplies, and online marketplace.

Where the user operates an e-commerce shop or enterprise, specific product dimensions, taking account of any secondary packaging, will generally be stored in the customer's enterprise resource planning (ERP) database and may be extracted by means of its application programming interface (API). Based on these dimensions, the backend server designs appropriate templates for the packaging inlay and enclosing box. It is however well understood that, in an alternative embodiment, such template design may be implemented entirely within an adequately capable handheld device instead of a dedicated server.

Upon acknowledgment of a customer order or similar transaction, a user of the system generates the packaging by clicking the pertinent item, prompting the hardware to manufacture a blank for the carton according to the template. In case the product dimensions should not be available, the user may choose to optically measure them by means of his smartphone, tablet, or equivalent mobile or stationary device. Furthermore, an online marketplace aggregates pre-set designs with or without configurable dimensions.

The protective inlays and shipping carton are produced by a copier-sized machine such as disclosed in PTL2. Corrugated fiberboard, preferably provided in rectangular sheets of at least 118 cm x 58 cm in size, is supplied for this purpose. In a multi-stage process, each sheet is automatically printed, folded or scored, and cut in the machine. Upon completion of this process, the user simply extracts the resulting blank from its sheet and folds it into its designated box or inlay shape.

### Example

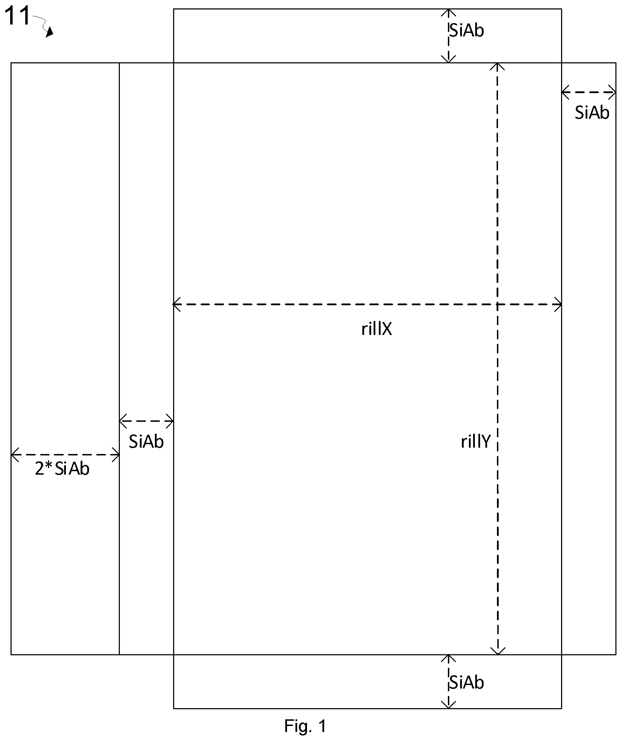

For an item sized VGX x VGY x VGH, Figure 1 illustrates the design of a spacer (11) that may be added to a package to protect the item from shock. For instance, the graphically indicated distance between scoring lines could be calculated as riIIX = VGX + 2 · SiAb + Rillzu and rillY = VGY + 2 · SiAb + Rillzu, respectively. Here, SiAb denotes an arbitrary safety margin and Rillzu denotes an allowance for scoring that typically approximates the thickness of the sheet material, for instance, 3 mm.

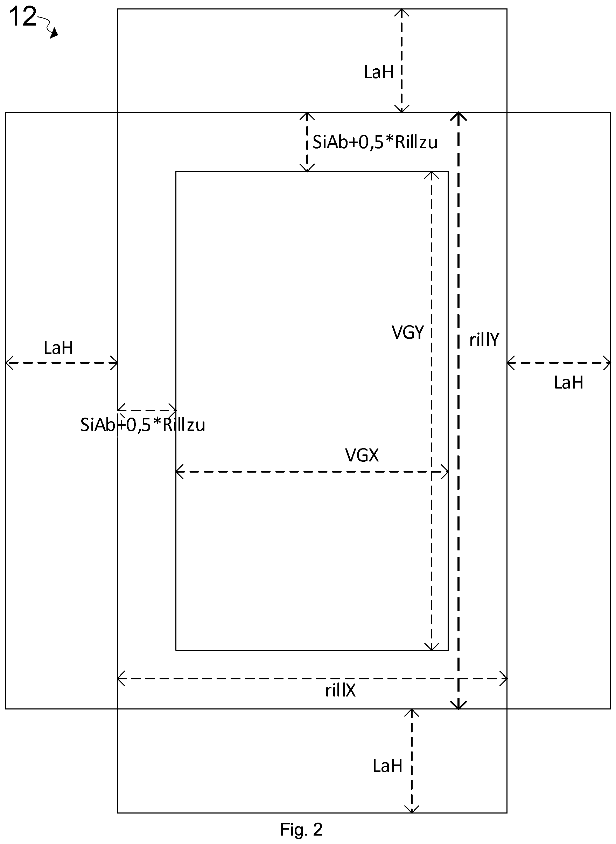

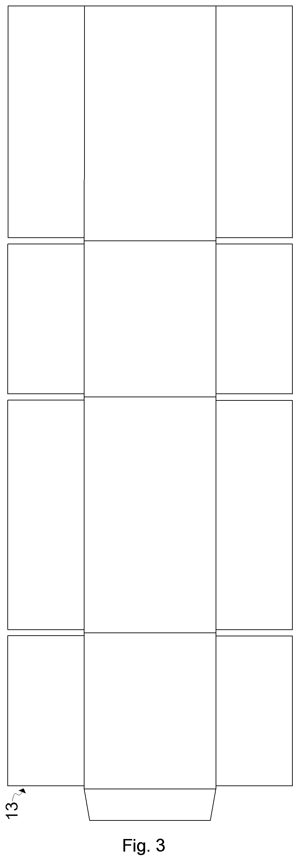

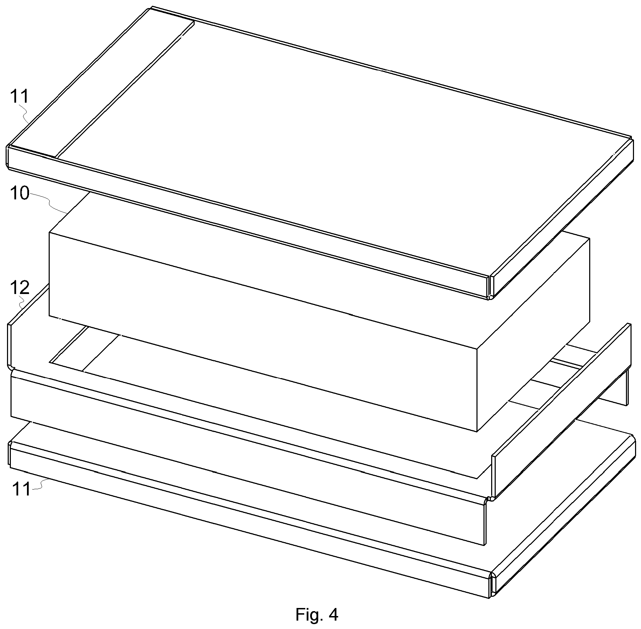

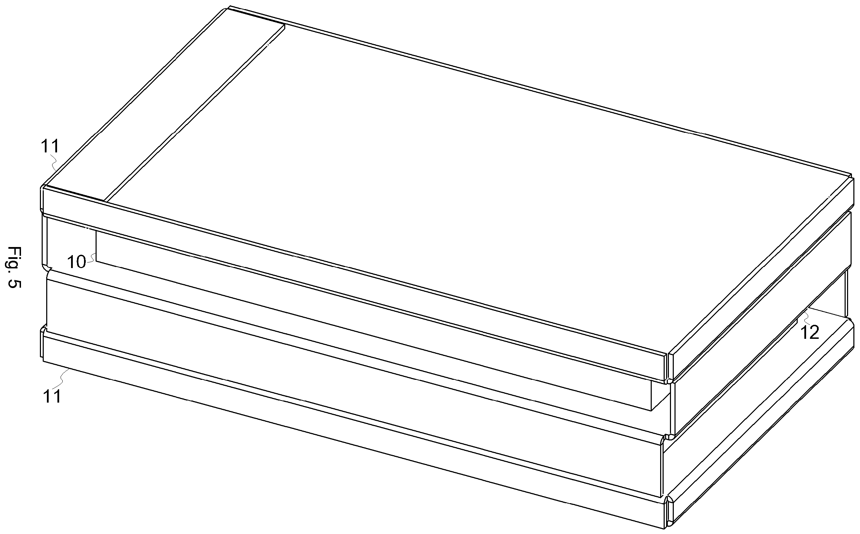

Correspondingly, Figure 2 illustrates the design of a protective inlay (12) for retaining said item (10) in transit. Here, LaH denotes a flap length that could be defined, for instance, as LaH = VGH/2 + Rillzu. In a container (13) such as the one depicted in Figure 3, the inlay (12) would ideally be sandwiched between two spacers (11) as laid out above. The resulting assembly (10, 11, 12) - sans container (13) - may be gathered from Figure 4 and Figure 5.

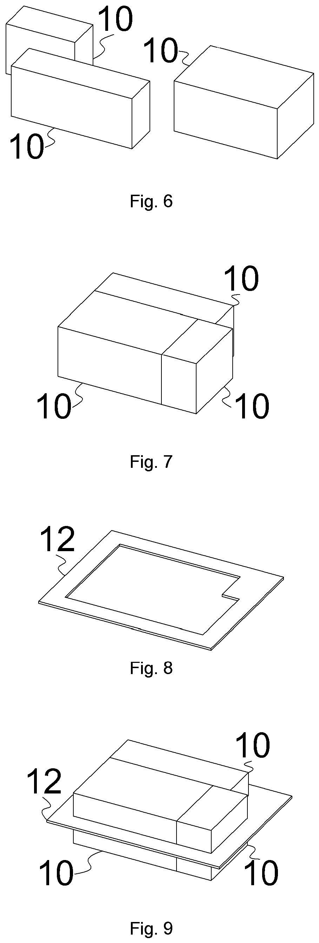

Figure 6 shows three items (10) to be accommodated by a single carton. Obviously, where minimization of volume is the primary constraint of the envisaged packaging, a simple rectangular nesting as depicted in Figure 7 achieves that design target, leading to an inlay (12) as shown in Figure 8 that would essentially frame and arrange the items (10) in a common layer, as best seen in Figure 9. Note that additional flaps or tongues for vertical retention of the inlay (12) are omitted here to preserve clarity of the illustration.

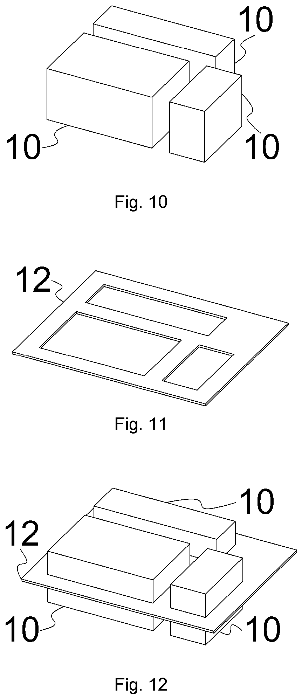

Where mutual contact among the items (10) is to be avoided, such as could be advisable with fragile merchandise, the spaced arrangement of Figure 10 may be considered superior. In this case, the method may be parametrized to spread the items (10) out equidistantly by means of a protective inlay (12) as per Figure 11, resulting in the assembly (10, 12) of Figure 12. The skilled artisan will appreciate that instead of such equidistant layout, the items (10) may be laid out irregularly, for instance, to equilibrate the resulting package for improved shipping and handling.

Means of artificial intelligence (AI) may be employed to optimize such configuration gradually based on feedback obtained by simulation, testing, or in the field. For instance, if a merchant observes or transit insurance reports increased return rate due to damage from shock, the distance between items may automatically be increased at the expense of additional volume.

Al could also be applied to optimize the presentation of items within their carton. For instance, where consumer packages are labelled in print, the method may avoid a layout where consumers are confronted with upside-down lettering or logos. A corresponding embodiment acording to the appended claims would thus enhance the addressee's unboxing experience without manual effort on the side of the merchant.

### Industrial applicability

The invention is applicable, inter alia, throughout the packaging and logistics industries.

### Reference signs list

- 10: Item to be accommodated
- 11: Spacer for protecting item from shock
- 12: Protective inlay for retaining item in transit
- 13: Box-shaped container for housing item
- VGX: Breadth of item
- VGY: Length of item
- riIIX, rillY: Distance between scoring lines
- SiAb: Safety margin
- Rillzu: Scoring allowance
- LaH: Flap length

### Citation list

The following documents are cited hereinbefore.

### Patent literature

NPL1 : TWEDE, Diana. The Wiley encyclopedia of packaging technology. 3rd edition. Edited by YAM, Kit L. Hoboken, NJ: John Wiley & Sons, 2010. ISBN 0470087048. p.678.
NPL2: DE 20201700587 U (THOMSEN FRANK [DE]) 30.11.2017

### Non-patent literature

NPL1: US 9914278 B (OSTERHOUT RYAN [US]; PACKSIZE LLC [US]) 06.03.2014

## Claims

1. Computer-implemented method of forming a folding carton, comprising
selecting, through a client such as an app or Web browser, an item (10) to be accommodated by the carton,
based on dimensions of the item (10), designing a template, and manufacturing blanks (11, 12, 13) for the carton according to the template, **characterized in that**
based on given targets such as material requirements, packing effort, shipping charges, or reported integrity of the carton or item (10), the template is,
by means of artificial intelligence, gradually optimized the blanks are manufactured from rectangular sheets of corrugated fiberboard, and
the sheets are printed, folded or scored, and cut by a single machine, said machine being program-controlled based on the template, using a plotter language such as HP-GL/2 or DMPL.

2. Method of Claim 1 wherein
the dimensions are established through enterprise resource planning, for example, retrieved from a warehouse management system such as by means of an application programming interface.

3. Method of Claim 1 wherein
the dimensions are captured, preferably through computer vision, by the client.

4. Method of Claim 1 wherein
the item (10) is selected as a pre-set design aggregated by an online marketplace and
the dimensions are specified with respect to the design.

5. Method of any of the preceding claims wherein
the template is generated on a server, preferably connected to the client via Internet.

6. Method of any of the preceding claims wherein
one of the blanks (11, 12, 13) takes the form of a box-shaped container for housing the item (10).

7. Method of any of the preceding claims wherein
at least one of the blanks (11, 12, 13) takes the form of a protective inlay (12) for retaining the item (10) in transit.

8. Method of Claim 7 wherein
the template is designed such that the inlay (12) separates the item (10) from other items to be accommodated by the carton.

9. Method of any of the preceding claims wherein
at least one of the blanks (11, 12, 13) takes the form of a spacer (11) for protecting the item (10) from shock.

10. Method of any of the preceding claims wherein
the sheets are 118 cm x 58 cm in size and furnished horizontally or vertically.

11. Data processing apparatus having means for carrying out the method
of any of the preceding claims.

12. Computer program comprising instructions which, when the program
is executed by a computer, cause the computer to carry out the method of any of Claim 1 through Claim 10.

13. Data carrier signal carrying the computer program of Claim 12.

## Patentansprüche

1. Computer-implementiertes Verfahren zur Herstellung einer Faltschachtel,
umfassend
Auswahl eines Gegenstandes (10), der in der Schachtel untergebracht werden soll, durch einen Client wie eine App oder einen Webbrowser,
Entwurf einer Schablone anhand der Abmessungen des Gegenstandes (10) und
Herstellung von Zuschnitten (11, 12, 13) für die Schachtel gemäß der Schablone,
**dadurch gekennzeichnet, dass**
ausgehend von vorgegebenen Zielen wie Materialbedarf, Verpackungsaufwand, Versandkosten oder gemeldeter Unversehrtheit des Kartons oder des Gegenstandes (10) die Schablone mit Hilfe künstlicher Intelligenz schrittweise optimiert wird,
die Zuschnitte aus rechteckigen Bögen aus Wellpappe hergestellt werden und die Bögen von einer einzigen Maschine bedruckt, gefaltet oder gerillt und geschnitten werden, die anhand der Schablone unter Verwendung einer Plottersprache wie HP-GL/2 oder DMPL programmgesteuert wird.

2. Verfahren nach Anspruch 1, wobei
die Abmessungen mit Hilfe einer unternehmensweiten Betriebsmittelplanung festgelegt werden, beispielsweise durch Abruf aus einem Lagerverwaltungssystem etwa über eine Anwendungsprogrammierschnittstelle.

3. Verfahren nach Anspruch 1, wobei
die Abmessungen vorzugsweise mit Hilfe von maschinellem Sehen durch den Client erfasst werden.

4. Verfahren nach Anspruch 1, wobei
der Gegenstand (10) als voreingestelltes Design ausgewählt wird, das von einem Online-Marktplatz bereitgestellt wird, und
die Abmessungen in Bezug auf das Design angegeben werden.

5. Verfahren nach einem der vorhergehenden Ansprüche, wobei
die Schablone auf einem Server erzeugt wird, der vorzugsweise über das Internet mit dem Client verbunden ist.

6. Verfahren nach einem der vorhergehenden Ansprüche, wobei
eine der Schablonen (11, 12, 13) die Form eines kastenförmigen Behälters zur Aufnahme des Gegenstandes (10) hat.

7. Verfahren nach einem der vorhergehenden Ansprüche, wobei
mindestens eine der Schablonen (11, 12, 13) die Form einer Schutzeinlage (12) hat, um den Gegenstand (10) während der Beförderung zu sichern.

8. Verfahren nach Anspruch 7, wobei
die Schablone so gestaltet ist, dass die Einlage (12) den Gegenstand (10) von anderen Gegenständen trennt, die von der Schachtel aufgenommen werden sollen.

9. Verfahren nach einem der vorhergehenden Ansprüche, wobei
mindestens eine der Schablonen (11, 12, 13) die Form eines Abstandshalters (11) zum Schutz des Gegenstandes (10) vor Stößen hat.

10. Verfahren nach einem der vorhergehenden Ansprüche, wobei
die Bögen 118 cm x 58 cm groß sind und horizontal oder vertikal angeordnet werden.

11. Datenverarbeitungsgerät mit Mitteln zur Durchführung des Verfahrens nach einem der vorhergehenden Ansprüche.

12. Computerprogramm mit Anweisungen, die, wenn das Programm von einem Computer ausgeführt wird, den Computer veranlassen, das Verfahren nach einem der Ansprüche 1 bis 10 auszuführen.

13. Datenträgersignal, welches das Computerprogramm nach Anspruch 12 trägt.

## Revendications

1. Méthode de formation d'une boîte pliante mise en œuvre par ordinateur,
comprenant
sélectionner, par l'intermédiaire d'un client tel qu'une application ou un navigateur Web, un article (10) devant être logé dans la boîte,
sur la base des dimensions de l'article (10), la conception d'un modèle, et fabriquer des découpes (11, 12, 13) pour la boîte selon le modèle, **caractérisé en ce que**
sur la base d'objectifs donnés tels que les besoins en matériaux, l'effort d'emballage, les frais d'expédition ou l'intégrité déclarée du carton ou de l'article (10), le modèle est progressivement optimisé au moyen de l'intelligence artificielle,
les découpes sont fabriquées à partir de feuilles rectangulaires de carton ondulé, et
les feuilles sont imprimées, pliées ou rainées et coupées par une seule machine, cette machine étant programmée en fonction du gabarit à l'aide d'un langage de traçage tel que HP-GL/2 ou DMPL.

2. Méthode de la revendication 1 dans laquelle
les dimensions sont établies par le biais d'un système de planification des ressources de l'entreprise, par exemple, extraites d'un système de gestion d'entrepôt, notamment au moyen d'une interface de programmation d'applications.

3. Méthode de la revendication 1 dans laquelle
les dimensions sont saisies par le client, de préférence au moyen de la vision par ordinateur.

4. Méthode de la revendication 1 dans laquelle
l'article (10) est sélectionné en tant que modèle prédéfini agrégé par une place de marché en ligne et
les dimensions sont spécifiées par rapport au modèle.

5. Méthode de l'une quelconque des revendications précédentes dans laquelle
le modèle est généré sur un serveur, de préférence connecté au client via Internet.

6. Méthode de l'une quelconque des revendications précédentes dans laquelle
l'une des découpes (11, 12, 13) se présente sous la forme d'une boîte destinée à contenir l'article (10).

7. Méthode de l'une quelconque des revendications précédentes dans laquelle
l'une au moins des découpes (11, 12, 13) se présente sous la forme d'un insert de protection (12) destiné à retenir l'article (10) pendant le transport.

8. Méthode de la revendication 7 dans laquelle
le modèle est conçu de manière à ce que l'insert (12) sépare l'article (10) des autres articles devant être logés dans le carton.

9. Méthode de l'une quelconque des revendications précédentes dans laquelle
l'une au moins des découpes (11, 12, 13) prend la forme d'une entretoise (11) destinée à protéger l'article (10) des chocs.

10. Méthode de l'une quelconque des revendications précédentes dans laquelle
les feuilles ont des dimensions de 118 cm x 58 cm et sont disposées horizontalement ou verticalement.

11. Appareil de traitement de données comportant des moyens pour mettre en œuvre la méthode de l'une quelconque des revendications précédentes.

12. Programme d'ordinateur comprenant des instructions qui, lorsque le programme est exécuté par un ordinateur, amènent l'ordinateur à mettre en œuvre la méthode de l'une quelconque des revendications 1 à 10.

13. Signal porteur de données transportant le programme d'ordinateur de la revendication 12.
